Europäisches Patentamt

European Patent Office

Office européen des brevets

(19)

(11) Veröffentlichungsnummer: **0 453 706 A2**

## (12) EUROPÄISCHE PATENTANMELDUNG

(21) Anmeldenummer: 91100483.6

(22) Anmeldetag: 17.01.91

(51) Int. Cl.5: **G03C 11/00, C02F 1/461**

(30) Priorität: 25.04.90 DE 4013068

(43) Veröffentlichungstag der Anmeldung:
30.10.91 Patentblatt 91/44

(84) Benannte Vertragsstaaten:
AT BE CH DE DK FR GB IT LI LU NL

(71) Anmelder: DORNIER GMBH
Postfach 1420
W-7990 Friedrichshafen 1(DE)

(72) Erfinder: Wahl, Klaus, Dipl.-Ing.
Fitzenweilerstrasse 11
W-7778 Markdorf(DE)
Erfinder: Jehle, Walter, Dipl.-Ing.
Wolketsweiler 604
W-7981 Horgenzell(DE)
Erfinder: Wagner, Burkhard, Dipl.-Ing.
Ludwig-Thoma-Weg 5
W-7991 Oberteuringen(DE)

(74) Vertreter: Landsmann, Ralf, Dipl.-Ing.
c/o DORNIER GMBH Postfach 1420
W-7990 Friedrichshafen 1(DE)

(54) **Entgiftung verbrauchter fotografischer Prozessbäder und Waschwässer mittels anodischer Oxidation.**

(57) Entgiftung verbrauchter fotografischer Prozess-bäder und Waschwässer mittels anodischer Oxidation.

Entgiftung verbrauchter fotografischer Prozeß-bäder und Waschwässer mittels anodischer Oxidation

Die Erfindung betrifft ein Verfahren zur möglichst vollständigen Oxidation der bei der Entwicklung belichteter photographischer Schichtträger entstehenden Rückstände wie beispielsweise verbrauchte Entwickler, Härtebäder, Bleichbäder, Bleichfixierbäder und Fixierbäder. Diese Badrückstände enthalten unter anderem Hydrochinon. Phenidon, Komplexbildner (zum Beispiel EDTA), Natrium- und Ammonium-Thiosulfat und andere organische Verbindungen, die zum Teil als toxisch eingestuft sind.

Diese Substanzen werden vom (Blech-) Fixierbad aus in geringer Menge auch in das nachfolgende Waschwasser verschleppt. Bei einer Kreislaufführung des Waschwasser, was erfindungsgemäß ebenfalls vorgesehen ist, fallen diese Verschleppungen ebenfalls wieder in konzentrierter Form an und sollen dann ebenfalls durch das erfindungsgemäße Verfahren mittels Oxidation entgiftet werden.

Aufgabe der Erfindung ist es, die Entgiftung durch anodische Oxidation der Inhaltsstoffe soweit zu führen, daß nach Abschluß des Prozesses sowohl der chemische Sauerstoffbedarf (CSB) der Lösung als Summenparameter, als auch die Konzentration der resultierenden Abbauprodukte jeweils unterhalb der vom Gesetzgeber zugelassenen Grenzwerte liegen. Hierdurch soll es möglich sein, die behandelte Lösung in die Kanalisation abgeben zu können.

Neben den genannten organischen Inhaltsstoffen enthalten die zu behandelnden Rückstände auch anorganische Inhaltsstoffe, insbesondere Silber. Letzteres wird in einer dem erfindungsgemäßen Verfahren vorgeschalteten Gewinnungs-Elektrolysezelle größtenteils zurückgewonnen. Der verbleibende Restgehalt an Silber soll in dem hier betrachteten Verfahren parallel zu den an der Anode stattfindenden Oxidationsvorgängen an der Kathode abgeschieden werden, ebenso wie andere anorganische Inhaltsstoffe (zum Beispiel Cadmium).

Die besonderen Anforderungen an die Anoden (hohes Oxidationspotential und niedriger pH-Wert) erfordern in Verbindung mit den aggressiven Chemikalien Anoden mit spezieller Oberfläche. Hierfür wurden Titananoden mit Beschichtungen aus $SnO_2$, $PbO_2$ oder $Fe_3O_4$ entwickelt. Zur Erzielung hoher Raum-/Zeit-Ausbeuten findet eine Zwangsumwälzung der Lösung in der Elektrolysezelle statt. Erforderlichenfalls werden Oxidationschemikalien zudosiert, wie zum Beispiel $H_2O_2$, $NaS_2O_8$ oder $O_3$, sofern die organischen Inhaltsstoffe nicht durch die Anode allein oxidiert werden.

Während des Elektrolyse-Vorganges werden der pH-Wert und das Redox-Potential gemessen.

Über einen Regler werden Chemikalien zur Einhaltung des vorgegebenen pH-Wertes zudosiert. Der Abbaugrad der organischen Inhaltsstoffe wird über das Redox-Potential bestimmt. Bei Erreichen eines vorgegebenen Sollwertes wird der Prozess beendet.

Die Erfindung wird nachfolgend anhand einer Figur näher erläutert.

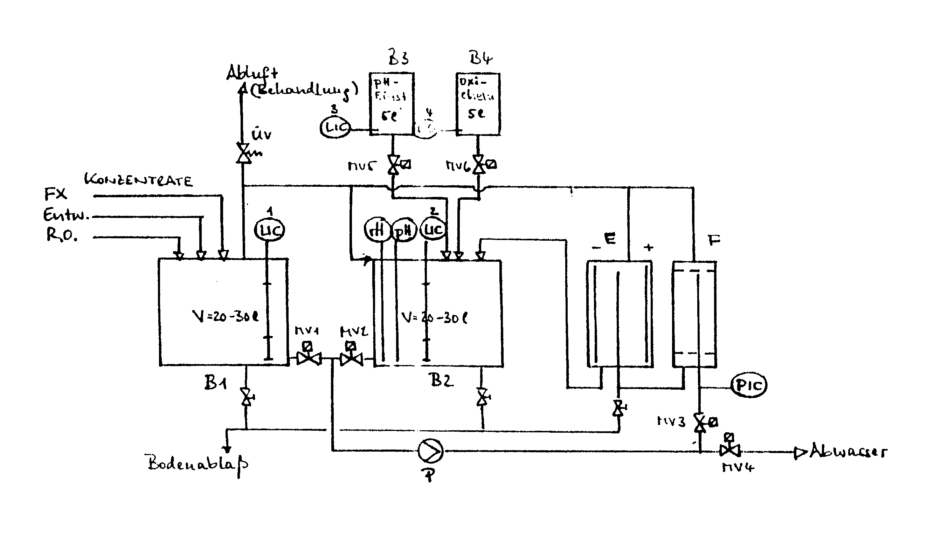

In der Figur sind die Modulkomponenten wie folgt bezeichnet:

| | |
|---|---|
| B1 | Pufferbehälter |
| B2 | Umwälzbehälter |
| P | Umwälz/Entleerungspumpe |
| E | Elektrolysezeile |
| F | Filter |
| B3, B4 | Chemikalienbehälter |
| MV1 - MV6 | Magnetventile |
| ÜV | Überdruckventil |
| LIC1, LIC2 | Schwimmschalter (Überlauf-/Trockenlaufschutz) |
| LIC3, LIC4 | Leermelderelais |
| rH | Redox-Messung, Steuerung,, Zugabe von chemischen Oxidationsmitteln. |

Die Überläufe aus dem Entwickler- und Fixiertank, sowie das Retentat aus dem Wasserkreislaufmodul (Umkehrosmose, R.O.) werden im Pufferbehälter B1 gesammelt. Der eigentliche Abbau dieser Konzentrate erfolgt im System Umwälzbehälter/Elektrolysezelle. Die Umwälzung erfolgt mit einer Pumpe. Die Elektrolyse wird über eine pH- und Redox-Messung geregelt und durch Zugabe von Chemikalien (Säure/Lauge, eventuell Oxidationsmittel) optimiert. Die bei der Behandlung entstehenden Gase ($SO_2/NH_3$) können über ein Überdruckventil abgelassen und einer Wäsche unterzogen werden. Ein Filter in der Umwälzleitung verhindert eine eventuelle Verschlammung der Elektro-Elektrolysezelle. Die Konzentrate werden so lange im Umwälzbetrieb gefahren, bis das Behandlungsziel, nämlich Minimierung des CSB-Wertes, erreicht ist. Dies wird mit der Messung des Redox-Potentiales festgelegt.

Ausführungsbeispiele der Erfindung:

Bei einem Ausführungsbeispiel der Erfindung wurde in einer mit einer Kationen-Austauscher-Membran geteilten Elektrolysezelle mit Edelstahlkathode und platinierter Titananode der CSB einer Hydrochinon-Modellösung auf 1 g pro Liter CSB reduziert.

In derselben Zelle des obigen Ausführungsbeispiels wurde mit einer $SnO_2$-Titan-Verbundanode der CSB einer Hydrochinon-Modellösung auf 1,5 g pro Liter CSB reduziert.

Bei einem weiteren Ausführungsbeispiel wurde mit einer EDTA-Modellösung mit einer platinierten Titananode und einer Graphit-Kathode eine EDTA-Reduktion um 90 % festgestellt

Bei einem Bleichfixierbad wurde in einer geteilten Zelle mit platinierter Titanelektrode ein Abbau von EDTA um 85 % erzielt. Die Zelle wurde mit einer Anionenaustauscher-Membran getrennt.

Eine Photoentwicklerlösung wurde auf 1 g pro Liter CSB mit einer Edelstahlkathode und einer platinierten Titananode reduziert.

**Patentansprüche**

1. Verfahren zur Entgiftung verbrauchter fotografischer Prozessbäder und Waschwässer mittels anodischer Oxidation, **dadurch gekennzeichnet,** daß in einer Elektrolysezelle die in den Prozessbädern vorhandenen Schadstoffe an den Anoden soweit aufoxidiert werden, daß die Lösung mit den entstandenen Oxidationsprodukten anschliessend mit oder ohne Nachbehandlung als schadstofffrei abgelassen werden kann.

2. Verfahren nach Anspruch 1, **dadurch gekennzeichnet,** daß die Oxidation durch Zugabe chemischer Oxidationsmittel wie zum Beispiel $H_2O_2$, $NaS_2O_8$ oder $O_3$, die nicht zur Bildung von AOX (adsorbierbare organische Halogenverbindungen) beitragen, verstärkt wird.

3. Verfahren nach Ansprüchen 1 und 2, **dadurch gekennzeichnet,** daß das Verfahren potentiostatisch arbeitet.

4. Verfahren nach Ansprüchen 1 bis 3, **dadurch gekennzeichnet,** daß der pH-Wert durch Chemikalienzudosierung geregelt wird.

5. Verfahren nach Ansprüchen 1 bis 4, **dadurch gekennzeichnet,** daß der gewünschte Abbaugrad über das Redox-Potentiel gemessen und der Prozess über einen vorgegebenen Sollwert beendet wird.

6. Verfahren nach Ansprüchen 1 bis 5, **dadurch gekennzeichnet,** daß das Flächenverhältnis Anode zu Kathode > 1 ist, zum Beispiel durch zylindrische Anordnung, wobei die Anode den Außenzylinder darstellt.

7. Verfahren nach Ansprüchen 1 bis 6, **dadurch gekennzeichnet,** daß die elektrolysierte Lösung nachbehandelt wird, zum Beispiel durch eine Ionenaustauscher- und/oder Adsorptionskolonne.

8. Verfahren nach Ansprüchen 1 bis 7, **dadurch gekennzeichnet,** daß zur Vermeidung von Geruchsbelästigungen die austretenden Gase zum Beispiel durch ein Aktivkohlefilter gereinigt oder in den abfliessenden Waschwasserstrom zugegeben werden.

9. Verfahren nach Ansprüchen 1 bis 8, **dadurch gekennzeichnet,** daß mit der Elektrolyse gleichermaßen Waschwasserkonzentrate behandelt werden können, die zum Beispiel durch Umkehrosmose oder Verdampfungsverfahren erzeugt wurden.

10. Verfahren nach Ansprüchen 1 bis 9, **dadurch gekennzeichnet,** daß Anode und Kathode durch eine Ionenaustauschermembran getrennt sind.

11. Verfahren nach Ansprüchen 1 bis 10, **dadurch gekennzeichnet,** daß die Anoden aus beschichteten Titanblechen bestehen, wobei die Beschichtung zum Beispiel aus $SnO_2$ oder $PbO_2$ oder $Fe_3O_4$ bestehen kann.

12. Verfahren nach Ansprüchen 1 bis 11, **dadurch gekennzeichnet,** daß der Elektrolysezelle eine andere Elektrolysezelle zur selektiven Silberabscheidung vorgeschaltet wird.